Europäisches Patentamt

European Patent Office

Office européen des brevets

(11) Publication number: **0 098 628**
**B1**

## EUROPEAN PATENT SPECIFICATION

(45) Date of publication of patent specification: **25.11.87**

(21) Application number: **83200815.5**

(22) Date of filing: **06.06.83**

(51) Int. Cl.⁴: **F 16 C 33/78**

54 Seal for a rolling bearing unit.

(30) Priority: **16.06.82 NL 8202445**

(43) Date of publication of application:
**18.01.84 Bulletin 84/03**

(45) Publication of the grant of the patent:
**25.11.87 Bulletin 87/48**

(84) Designated Contracting States:
**DE FR GB IT NL**

(56) References cited:
**FR-A-2 253 942**
**FR-A-2 254 989**
**FR-A-2 286 309**
**FR-A-2 317 548**
**GB-A- 876 194**
**GB-A-1 598 681**
**US-A-3 370 895**
**US-A-3 797 899**

(73) Proprietor: **SKF Industrial Trading &**
**Development Company B.V.**
**Kelvinbaan 16 P.O. Box 50**
**NL-3430 AB Nieuwegein (NL)**

(72) Inventor: **Gabelli, Antonio**
**Turkooispad 11**
**Ijsselstein (NL)**
Inventor: **Bras, Johan Christiaan Marinus**
**Lingedijk 40**
**Buurmalsen (NL)**

(74) Representative: **Merkelbach, B.**
**SKF Engineering & Research Centre B.V. P.O.**
**Box 2350**
**NL-3430 DT Nieuwegein (NL)**

Courier Press, Leamington Spa, England.

**Description**

The invention relates to a seal for a rolling bearing consisting of inner and outer races provided with rows of rolling members between the races, said seal comprising an annular elastomeric body member, an annular dished spring reinforcing member and a wear ring of low friction material, wherein the seal is attached to the inner race and the wear ring sealingly engages a radially extending annular end surface of the outer race.

A rolling bearing of the type mentioned is disclosed in the US patent 3 370 895 which in particular relates to a bearing seal for drilling bits. It is self-evident that in such a rolling bearing heavy demands are placed on the seals, since on no account should dirt be able to penetrate into the rolling bearing from outside. To allow lubrication the seals must yield in one direction to allow lubricant to pass out of the bearing but must retain their sealing ability in the other direction under all circumstances.

It appears, however, that this type of bearing seal is not suitable for use in arrangements which are subjected to a high range of rotational speeds i.e. from low to high ranges of speeds in relatively short periods. Such conditions are very often met in wheel-bearings for motorcars or the like vehicles.

The object of the invention is to procure an improved seal for a rolling bearing unit of the type mentioned which produces effective long-lasting sealing under all but in particular under the above indicated operating circumstances.

This object is accomplished in that the dished spring member is divided at its inner circumference into a plurality of fingers at least the ends of which are not embedded in the body member, the free ends of the fingers engaging a flange of a bushing secured to the inner race.

In this way the ring preferable of a self-lubricating material is kept constantly pressed against the main surface of the outer race, even when relatively small displacements between inner and outer races occur as a result of the forces exerted on the outer race due to high speed of the motorcar or other physical circumstances such as the development of high temperatures during braking.

The invention is described in greater detail with reference to the drawing, in which:

Figure 1 shows, axial cross-section, part of a rolling bearing unit wherein are mounted sealing rings pursuant to the invention, and

Figure 2 shows a dished spring ring in perspective.

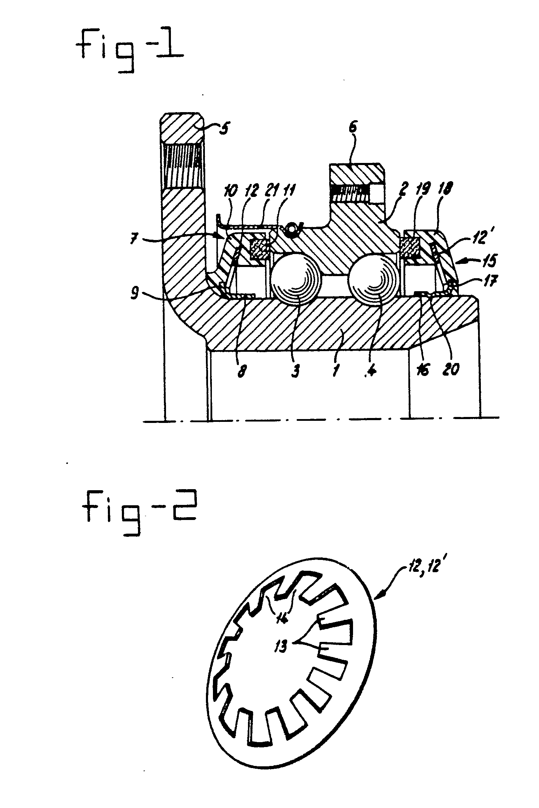

As shown in Figure 1, the rolling bearing unit comprises an inner race 1 and an outer race 2, between which are placed two rows of rolling members in the form of balls 3 and 4. On the inner race 1 is formed a flange 5 for, for example, attachment of the hub of a wheel, such as a front wheel of a motor vehicle with four-wheel drive. On the outer race 2 is formed a flange 6 for attachment of the rolling bearing, for example when used in driven front wheels on the steering components, whereby the steering forces may grip the flange 6.

At the left-hand edge in Figure 1 is mounted a sealing ring 7, consisting of a bushing 8 with a flange 9, an annular member 10 of an elastic material, in particular a synthetic material, and a ring 11 of a self-lubricating material, for example graphite or compounds thereof, which is partially embedded in the member 10. In addition, a dished spring ring 12 is partially embedded in the member 10, the inner edge of which ring rests against the flange 9, while lips 13 are formed in this inner edge (see Figure 2) owing to the fact that the dished spring ring is provided with recesses 14. This dished spring ring keeps the springiness of the seal constant for a long time, due allowance being made for wear and tear of the ring 11.

As shown in Figure 1, the sealing ring 7 is mounted about the inner race 1 and at the same time rests against the flange 5.

At the right-hand side in Figure 1 is mounted a sealing ring 15, which likewise consists of a bushing 16 with a flange 17 and a member 18 of elastic material, in particular synthetic material, wherein is partially embedded a ring 19 of a self-lubricating material, such as graphite or a compound thereof. In addition, a dished spring ring 12' is present in the same way as in the case of the sealing ring 7, which ring 12' has the same shape as the dished spring ring 12.

The rings 11 and 19 need not rest against the outer race by flat surfaces, as shown. These surfaces may alternatively be provided with grooves, or may be convex.

The bushing 16 is provided with a concentric protrusion 20 projecting inward, which is accommodated in a groove in the inner race 1. The bushing 16, however, may alternatively be attached by (self-)clamping near the raceway of the balls 4.

As shown in Figure 1, the rings of self-lubricating material 11 and 19 are pressed springily against the annular main surface of the outer race 2, thereby procuring long-lasting effective sealing.

A protective ring 21 is further mounted about the sealing ring 7, since this portion of the bearing, used as wheel bearing, is directly exposed to eroding circumstances, such as splashing gravel, dirt, mud and sand.

**Claims**

1. A seal for a roller bearing consisting of inner and outer races (1, 2) provided with rows of rolling members (3, 4) between the races, said seal comprising an annular elastomeric body member (10, 18), an annular dished spring reinforcing member (12, 12') and a wear ring (11, 19) of low friction material, wherein the seal is attached to the inner race and the wear ring sealingly engages a radially extending annular end surface of the outer race, characterised in that, the dished spring member (12, 12') is divided at its inner circumference into a plurality of fingers (13) at least the ends of which are not embedded in the body member (10, 12), the free ends of the fingers engaging a flange of a bushing (8, 16) secured to the inner race (1).

2. Rolling bearing which inner race is provided with an attaching flange and having seals pursuant to claim 1, characterised in that, one seal (7) rests against and is attached close to the attaching flange (5) of the said inner race (1) whilst the second seal (15) is attached about the free end of said inner race (1).

3. Rolling bearing according to claim 2, characterised in that, a protective ring (21) is mounted on the outer race (2) and extends axially towards the flange (5) on the inner race (1).

4. Rolling bearing according to claims 2 or 3, characterised in that, the bushing (16) of the second seal (15) is provided with a protrusion (20) projecting radially inwards and accommodated in a groove in said inner race (1).

## Patentansprüche

1. Dichtvorrichtung für ein Wälzlager, das aus einem inneren und äußeren Laufring (1, 2) mit dazwischen angeordneten Reihen von Wälzkörpern (3, 4) besteht, welche einen ringförmigen, elastomeren Hauptteil (10, 18), ein ringförmiges, tellerfederartiges Verstärkungsglied (12, 12') und einen Verschleißring (11, 19) aus reibungsarmem Material aufweist und an dem inneren Laufring angebracht ist, wobei der Verschleißring an einer sich radial erstreckenden, ringförmigen Endfläche des äußeren Laufrings dichtend anliegt, dadurch gekennzeichnet, daß das tellerförmige Federglied (12, 12') an seinem inneren Umfang in eine Vielzahl von Fingern (13) aufgeteilt ist, wobei zumindest deren Enden nicht in das Hauptteil (10, 12) eingebettet sind, und daß die freien Enden der Finger (13) an einem Flansch (9, 17) einer Büchse (8, 16) angreifen, die am inneren Laufring (1) befestigt ist.

2. Wälzlager, dessen innerer Laufring mit einem Befestigungsflansch versehen ist und das eine Dichtvorrichtung nach Anspruch 1 aufweist, dadurch gekennzeichnet, daß eine erste Dichtvorrichtung (7) neben dem Befestigungsflansch (5) des inneren Laufrings (1) angebracht und an diesem abgestützt ist, während die zweite Dichtvorrichtung (15) über dem freien Ende des inneren Laufrings (1) angebracht ist.

3. Wälzlager nach Anspruch 2, dadurch gekennzeichnet, daß ein sich axial in Richtung zu dem Flansch (5) des inneren Laufrings (1) erstreckender Schutzring (21) an dem äußeren Laufring (2) befestigt ist.

4. Wälzlager nach Anspruch 2 oder 3, dadurch gekennzeichnet, daß die Büchse (16) der zweiten Dichtvorrichtung (15) mit einer radial einwärts vorspringenden, in einer Vertiefung des inneren Laufrings (1) aufgenommenen Erhebung (20) versehen ist.

## Revendications

1. Joint d'étanchéité pour un roulement constitué de bagues intérieure et extérieure (1, 2) entre lesquelles sont placées des rangées d'éléments roulants (3, 4), ce joint d'étanchéité comprenant un élément formant corps annulaire (10, 18) en élastomére, un élément annulaire, élastique, bombé (12, 12') de renfort et un anneau d'usure (11, 19) constitué d'une matière à faible frottement, dans lequel le joint d'étanchéité est fixé à la bague intérieure tandis que l'anneau d'usure forme un contact étanche avec une surface annulaire en prolongement radial à l'extrémité de la bague extérieure, caractérisé en ce que l'élément élastique, bombé (12, 12') est divisé, sur sa circonférence intérieure, en une pluralité de languettes (13) dont au moins les extrémités ne sont pas encastrées dans l'élément formant corps (10, 18), les extrémités libres des languettes venant en appui contre en rebord d'un manchon (8, 16) fixé sur la bague intérieure (1).

2. Roulement dont la bague intérieure est équipée d'une bride de fixation et comportant des joints d'étanchéité suivant la revendication 1, caractérisé en ce que le premier joint (7) d'étanchéité s'appuie contre et est fixé près de la bride (5) de fixation de cette bague intérieure (1) tandis que le deuxième joint (15) d'étanchéité est fixé autour de l'extrémité libre de la bague intérieure (1).

3. Roulement suivant la revendication 2, caractérisé en ce qu'un manchon (21) de protection est monté sur la bague extérieure (2) et se prolonge axialement vers la bride (5) prévue sur la bague intérieure (1).

4. Roulement suivant les revendications 2 ou 3, caractérisé en que le manchon (16) du deuxième joint (15) d'étanchéité est pourvu d'une protubérance (20) faisant saillie radialement ves l'intérieur et logée dans une gorge formée dans la bague intérieure (1).

fig-1

fig-2